# EUROPEAN PATENT SPECIFICATION

(11) **EP 4 256 976 B1**
(45) Date of publication and mention of the grant of the patent: **01.04.2026**
(21) Application number: 23192839.1
(22) Date of filing: 10.12.2019
(51) Int. Cl.: A23L 27/30

(54) **SWEETENER FORMULATIONS AND USES**
SÜSSSTOFFFORMULIERUNGEN UND VERWENDUNGEN
FORMULATIONS D'ÉDULCORANT ET UTILISATIONS

(30) Priority: 19.12.2018 US 201862781823 P; 08.01.2019 EP 19150683
(43) Date of publication of application: 11.10.2023
(62) Divisional of application: 19817699.2
(73) Proprietor: Firmenich SA, 1242 Satigny (CH)
(72) Inventor: FARHAT, Imad, 638377 Singapore (SG); HUGHES, Susannah, Plainsboro, 08536 (US); SAVAGE, Craig, Plainsboro, 08536 (US); SUBRAMANIAN, Srinivasan, Plainsboro, 08536 (US); JHA, Priti, Plainsboro, 08536 (US); BANAVARA, Dattatreya, Plainsboro, 08536 (US)
(74) Representative: Strych, Sebastian

(56) References cited:
- WO-A1-2007/129251
- WO-A1-2015/042344
- WO-A1-2017/125518
- WO-A1-2017/189994
- US-A1- 2015 320 101
- US-A1- 2016 183 574
- US-A1- 2017 156 384
- US-A1- 2017 190 728
- US-A1- 2017 231 259
- US-A1- 2018 035 702
- US-A1- 2018 289 042
- US-A1- 2018 289 050
- US-A1- 2018 289 051
- US-A9- 2018 263 262
- US-B2- 8 993 027

## Description

### TECHNICA.L FIELD

The present disclosure generally provides compositions of non-caloric or low-caloric sweeteners, as well as the use of such compounds to sweeten various food and beverage products. In some embodiments, the compositions disclosed herein improve the taste of non-caloric or low-caloric sweeteners by imparting a more sugar-like taste or characteristic. In particular, the compositions provide a more sugar-like temporal profile, including sweetness onset and sweetness linger, or a more sugar-like flavor profile.

### BACKGROUND

The taste system provides sensory information about the chemical composition of the external world. Taste transduction is one of the more sophisticated forms of chemically triggered sensation in animals. Signaling of taste is found throughout the animal kingdom, from simple metazoans to the most complex of vertebrates. Mammals are believed to have five basic taste modalities: sweet, bitter, sour, salty, and umami.

Sweetness is the taste most commonly perceived when eating foods rich in sugars. Mammals generally perceive sweetness to be a pleasurable sensation, except in excess. Caloric sweeteners, such as sucrose and fructose, are the prototypical examples of sweet substances. Although a variety of no-calorie and low-calorie substitutes exist, these caloric sweeteners are still the predominant means by which comestible products induce the perception of sweetness upon consumption.

Metabolic disorders and related conditions, such as obesity, diabetes, and cardiovascular disease, are major public health concerns throughout the world. And their prevalence is increasing at alarming rates in almost every developed country. Caloric sweeteners are a key contributor to this trend, as they are included in various packaged food and beverage products to make them more palatable to consumers. In many cases, no-calorie or low-calorie substitutes can be used in foods and beverages in place of sucrose or fructose. Even so, these compounds impart sweetness differently from caloric sweeteners, and a number of consumers fail to view them as suitable alternatives. Moreover, such compounds may be difficult to incorporate into certain products. In some instances, they may be used as partial replacements for caloric sweeteners, but their mere presence can cause many consumers to perceive unpleasant off-tastes including, astringency, bitterness, and metallic and licorice tastes. Thus, lower-calorie sweeteners face certain challenges to their adoption.

US 2018/0289042 A1 relates to edible compositions and to novel comestibles such as beverages and other foods comprising such novel compositions.

WO 2017/189994 relates to steviol glycosides blends having an improved flavor profile.

US 2018/0289051 A1 relates to ternary blends of rebaudioside B, rebaudioside D and rebaudioside M, and quaternary blends of rebaudioside B, rebaudioside D, rebaudioside M and rebaudioside A.

Thus, there is a continuing need to discover ways of formulating non-caloric and low-caloric sweeteners to create a more sugar-like taste profile.

### SUMMARY

The present disclosure sets forth certain discoveries whereby lower-calorie sweeteners are formulated in a way that imparts a more sugar-like taste profile.

In a first aspect, the disclosure provides a sweetener composition comprising rebaudioside A, rebaudioside D, rebaudioside M, stevioside, rebaudioside B, rebaudioside C, rebaudioside F, dulcoside A, rubusoside, and steviolbioside; wherein the weight ratio of rebaudioside M to rebaudioside A ranges from 9:16 to 10:3.

In a second aspect, the disclosure provides a flavored article comprising the sweetener composition according to the invention.

In a third aspect, the disclosure provides a tabletop sweetener comprising a bulking agent and a sweetener composition according to the invention.

### BRIEF DESCRIPTION OF THE FIGURES

FIG. 1 shows the sensory profile of a sweetener composition (not according to the invention).
FIG. 2 shows the sensory profile of a sweetener composition (not according to the invention).
FIG. 3 shows the sensory profile of a sweetener composition (not according to the invention).
FIG. 4 shows the sensory profile of a sweetener composition according to the invention.

### DETAILED DESCRIPTION

### Sweetener Composition

Generally, this disclosure addresses the above described need by providing a sweetener composition with an improved temporal profile or flavor profile or both and flavored articles comprising sweetener compositions according to certain embodiments presented herein. In some embodiments, the improved temporal profile and/or flavor profile is a sucrose-like temporal profile and/or flavor profile.

As used herein, the phrase "undesirable taste" includes any taste property which is not imparted by sugars, e.g. glucose, sucrose, fructose, or similar saccharides. Non-limiting examples of undesirable tastes include delayed sweetness onset, lingering sweet aftertaste, metallic taste, bitter taste, cooling sensation taste or menthol-like taste, licorice-like taste, and/or the like.

As used herein, the phrases "sugar-like characteristic, " "sugar-like taste, " "sugar-like sweet, " "sugary, " and "sugar-like" are synonymous. Sugar-like characteristics include any characteristic similar to that of sucrose and include, but are not limited to, maximal response, flavor profile, temporal profile, adaptation behavior, mouthfeel, concentration/response function, tastant and flavor/sweet taste interactions, spatial pattern selectivity, and temperature effects. These characteristics are dimensions in which the taste of sucrose is different from the tastes of sweetener compositions. Whether or not a characteristic is more sugar-like is determined by an expert sensory panel who taste compositions comprising sugar and compositions according to certain embodiments presented herein, and provide their impression as to the similarities of the characteristics of those compositions, with those comprising sugar. Suitable procedures for determining whether a composition has a more sugar-like taste are well known in the art.

In some embodiments, a panel of assessors is used to measure the reduction of sweetness linger. Briefly described, a panel of assessors (generally 8 to 12 individuals) is trained to evaluate sweetness perception and measure sweetness at several time points from when the sample initially is taken into the mouth until 3 minutes after it has been expectorated. Using statistical analysis, the results are compared between samples containing additives and samples that do not contain additives. A decrease in score for a time point measured after the sample has cleared the mouth indicates there has been a reduction in sweetness perception.

The panel of assessors may be trained using procedures well known to those of ordinary skill in the art. In one embodiment, the panel of assessors may be trained using the Spectru Descriptive Analysis Method (Meilgaard et al, Sensory Evaluation Techniques, 3rd edition, Chapter 11). Desirably, the focus of training should be the recognition of and the measure of the basic tastes; specifically, sweet. In order to ensure accuracy and reproducibility of results, each assessor should repeat the measure of the reduction of sweetness linger about three to about five times per sample, taking at least a five minute break between each repetition and/or sample and rinsing well with water to clear the mouth.

Generally, the method of measuring sweetness comprises taking a 10 mL sample into the mouth, holding the sample in the mouth for 5 seconds and gently swirling the sample in the mouth, rating the sweetness intensity perceived at 5 seconds, expectorating the sample (without swallowing following expectorating the sample), rinsing with one mouthful of water (e.g., vigorously moving water in mouth as if with mouth wash) and expectorating the rinse water, rating the sweetness intensity perceived immediately upon expectorating the rinse water, waiting 45 seconds and, while waiting those 45 seconds, identifying the time of maximum perceived sweetness intensity and rating the sweetness intensity at that time (moving the mouth normally and swallowing as needed), rating the sweetness intensity after another 10 seconds, rating the sweetness intensity after another 60 seconds (cumulative 120 seconds after rinse), and rating the sweetness intensity after still another 60 seconds (cumulative 180 seconds after rinse). Between samples take a 5 minute break, rinsing well with water to clear the mouth.

The amount of sucrose, and thus another measure of sweetness, in a reference solution may be described in degrees Brix (°Bx). One degree Brix is 1 gram of sucrose in 100 grams of solution and represents the strength of the solution as percentage by weight (% w/w) (strictly speaking, by mass).

In some embodiments, the sweetener composition comprises the sweeteners in an amount effective to provide a sweetness equivalence from about 0.50 to 14 degrees Brix of sugar when present in a sweetened composition (e.g. a consumable), such as, for example, from about 5 to about 12 degrees Brix.

The present invention provides a sweetener composition comprising steviol glycosides, rebaudioside M, rebaudioside A, rebaudioside D, stevioside, rebaudioside B, rebaudioside C, rebaudioside F, dulcoside A, rubusoside, and steviolbioside; wherein the weight ratio of rebaudioside M to rebaudioside A ranges from 9:16 to 10:3. In some embodiments, the ratio (w/w) of rebaudioside M to rebaudioside D ranges from 1:1 to 3:2. In some embodiments, the ratio (w/w) of rebaudioside A to rebaudioside D ranges from 3:10 to 8:1. In some embodiments, the composition further comprises a mouthfeel enhancer comprising a glycerol wash of an edible oil, phloretin, naringenin, erythritol, or a sugar.

The following paragraphs set forth various embodiments.

In some embodiments, the composition further comprises at least one second selected from the group consisting of: a mouthfeel enhancer comprising a glycerol wash of an edible oil, phloretin, naringenin, erythritol, and a sugar.

In some embodiments, the edible oil is selected from the group consisting of: palm oil, oat oil, coconut oil, high oleic sunflower oil, tomato seed oil, and combinations thereof.

In some embodiments, when the composition is added to a flavored article, the final concentration of rebaudioside M is from 5 to 45 ppm. Alternatively, when the composition is added to a flavored article, the final concentration of rebaudioside M is from 5 to 40 ppm. Alternatively, when the composition is added to a flavored article, the final concentration of rebaudioside M is from 5 to 35 ppm. Alternatively, when the composition is added to a flavored article, the final concentration of rebaudioside M is from 5 to 30 ppm. Alternatively, when the composition is added to a flavored article, the final concentration of rebaudioside M is from 5 to 25 ppm. Alternatively, when the composition is added to a flavored article, the final concentration of rebaudioside M is from 5 to 20 ppm. Alternatively, when the composition is added to a flavored article, the final concentration of rebaudioside M is from 5 to 15 ppm. Alternatively, when the composition is added to a flavored article, the final concentration of rebaudioside M is from 5 to 10 ppm.

In some embodiments, when the composition is added to a flavored article, the final concentration of rebaudioside M is from 10 to 45 ppm. Alternatively, when the composition is added to a flavored article, the final concentration of rebaudioside M is from 15 to 45 ppm. Alternatively, when the composition is added to a flavored article, the final concentration of rebaudioside M is from 20 to 45 ppm. Alternatively, when the composition is added to a flavored article, the final concentration of rebaudioside M is from 25 to 45 ppm. Alternatively, when the composition is added to a flavored article, the final concentration of rebaudioside M is from 30 to 45 ppm. Alternatively, when the composition is added to a flavored article, the final concentration of rebaudioside M is from 35 to 45 ppm. Alternatively, when the composition is added to a flavored article, the final concentration of rebaudioside M is from 40 to 45 ppm.

In some embodiments, when the composition is added to a flavored article, the final concentration of rebaudioside M is 5, or 10, or 15, or 20, or 35, or 30, or 35, or 40, or 45 ppm.

In some embodiments, when the composition is added to a flavored article, the final concentration of rebaudioside A is from 5 to 150 ppm. Alternatively, when the composition is added to a flavored article, the final concentration of rebaudioside A is from 10 to 150 ppm. Alternatively, when the composition is added to a flavored article, the final concentration of rebaudioside A is from 15 to 150 ppm. Alternatively, when the composition is added to a flavored article, the final concentration of rebaudioside A is from 20 to 150 ppm. Alternatively, when the composition is added to a flavored article, the final concentration of rebaudioside A is from 25 to 150 ppm. Alternatively, when the composition is added to a flavored article, the final concentration of rebaudioside A is from 30 to 150 ppm. Alternatively, when the composition is added to a flavored article, the final concentration of rebaudioside A is from 35 to 150 ppm. Alternatively, when the composition is added to a flavored article, the final concentration of rebaudioside A is from 40 to 150 ppm. Alternatively, when the composition is added to a flavored article, the final concentration of rebaudioside A is from 45 to 150 ppm. Alternatively, when the composition is added to a flavored article, the final concentration of rebaudioside A is from 50 to 150 ppm. Alternatively, when the composition is added to a flavored article, the final concentration of rebaudioside A is from 55 to 150 ppm. Alternatively, when the composition is added to a flavored article, the final concentration of rebaudioside A is from 60 to 150 ppm. Alternatively, when the composition is added to a flavored article, the final concentration of rebaudioside A is from 65 to 150 ppm. Alternatively, when the composition is added to a flavored article, the final concentration of rebaudioside A is from 70 to 150 ppm. Alternatively, when the composition is added to a flavored article, the final concentration of rebaudioside A is from 75 to 150 ppm. Alternatively, when the composition is added to a flavored article, the final concentration of rebaudioside A is from 80 to 150 ppm. Alternatively, when the composition is added to a flavored article, the final concentration of rebaudioside A is from 85 to 150 ppm. Alternatively, when the composition is added to a flavored article, the final concentration of rebaudioside A is from 90 to 150 ppm. Alternatively, when the composition is added to a flavored article, the final concentration of rebaudioside A is from 95 to 150 ppm. Alternatively, when the composition is added to a flavored article, the final concentration of rebaudioside A is from 100 to 150 ppm. Alternatively, when the composition is added to a flavored article, the final concentration of rebaudioside A is from 105 to 150 ppm. Alternatively, when the composition is added to a flavored article, the final concentration of rebaudioside A is from 110 to 150 ppm. Alternatively, when the composition is added to a flavored article, the final concentration of rebaudioside A is from 115 to 150 ppm. Alternatively, when the composition is added to a flavored article, the final concentration of rebaudioside A is from 10 to 150 ppm. Alternatively, when the composition is added to a flavored article, the final concentration of rebaudioside A is from 120 to 150 ppm. Alternatively, when the composition is added to a flavored article, the final concentration of rebaudioside A is from 125 to 150 ppm. Alternatively, when the composition is added to a flavored article, the final concentration of rebaudioside A is from 130 to 150 ppm. Alternatively, when the composition is added to a flavored article, the final concentration of rebaudioside A is from 135 to 150 ppm. Alternatively, when the composition is added to a flavored article, the final concentration of rebaudioside A is from 140 to 150 ppm. Alternatively, when the composition is added to a flavored article, the final concentration of rebaudioside A is from 145 to 150 ppm.

In some embodiments, when the composition is added to a flavored article, the final concentration of rebaudioside A is from 5 to 145 ppm. Alternatively, when the composition is added to a flavored article, the final concentration of rebaudioside A is from 5 to 140 ppm. Alternatively, when the composition is added to a flavored article, the final concentration of rebaudioside A is from 5 to 135 ppm. Alternatively, when the composition is added to a flavored article, the final concentration of rebaudioside A is from 5 to 130 ppm. Alternatively, when the composition is added to a flavored article, the final concentration of rebaudioside A is from 5 to 125 ppm. Alternatively, when the composition is added to a flavored article, the final concentration of rebaudioside A is from 5 to 120 ppm. Alternatively, when the composition is added to a flavored article, the final concentration of rebaudioside A is from 5 to 115 ppm. Alternatively, when the composition is added to a flavored article, the final concentration of rebaudioside A is from 5 to 110 ppm. Alternatively, when the composition is added to a flavored article, the final concentration of rebaudioside A is from 5 to 105 ppm. Alternatively, when the composition is added to a flavored article, the final concentration of rebaudioside A is from 5 to 100 ppm. Alternatively, when the composition is added to a flavored article, the final concentration of rebaudioside A is from 5 to 95 ppm. Alternatively, when the composition is added to a flavored article, the final concentration of rebaudioside A is from 5 to 90 ppm. Alternatively, when the composition is added to a flavored article, the final concentration of rebaudioside A is from 5 to 85 ppm. Alternatively, when the composition is added to a flavored article, the final concentration of rebaudioside A is from 5 to 80 ppm. Alternatively, when the composition is added to a flavored article, the final concentration of rebaudioside A is from 5 to 75 ppm. Alternatively, when the composition is added to a flavored article, the final concentration of rebaudioside A is from 5 to 70 ppm. Alternatively, when the composition is added to a flavored article, the final concentration of rebaudioside A is from 5 to 65 ppm. Alternatively, when the composition is added to a flavored article, the final concentration of rebaudioside A is from 5 to 60 ppm. Alternatively, when the composition is added to a flavored article, the final concentration of rebaudioside A is from 5 to 55 ppm. Alternatively, when the composition is added to a flavored article, the final concentration of rebaudioside A is from 5 to 50 ppm. Alternatively, when the composition is added to a flavored article, the final concentration of rebaudioside A is from 5 to 45 ppm. Alternatively, when the composition is added to a flavored article, the final concentration of rebaudioside A is from 5 to 40 ppm. Alternatively, when the composition is added to a flavored article, the final concentration of rebaudioside A is from 5 to 35 ppm. Alternatively, when the composition is added to a flavored article, the final concentration of rebaudioside A is from 5 to 30 ppm. Alternatively, when the composition is added to a flavored article, the final concentration of rebaudioside A is from 5 to 25 ppm. Alternatively, when the composition is added to a flavored article, the final concentration of rebaudioside A is from 5 to 20 ppm. Alternatively, when the composition is added to a flavored article, the final concentration of rebaudioside A is from 5 to 15 ppm. Alternatively, when the composition is added to a flavored article, the final concentration of rebaudioside A is from 5 to 10 ppm.

In some embodiments, when the composition is added to a flavored article, the final concentration of rebaudioside A is 5, or 10, or 15, or 20, or 25, or 30, or 35, or 40, or 45, or 50, or 55, or 60, or 65, or 70, or 75, or 80, or 85, or 90, or 95, or 100, or 105, or 110, or 115, or 120, or 125, or 130, or 135, or 140, or 145, or 150 ppm.

In some embodiments, when the composition is added to a flavored article, the final concentration of rebaudioside D is from 5 to 45 ppm. Alternatively, when the composition is added to a flavored article, the final concentration of rebaudioside D is from 5 to 40 ppm. Alternatively, when the composition is added to a flavored article, the final concentration of rebaudioside D is from 5 to 35 ppm. Alternatively, when the composition is added to a flavored article, the final concentration of rebaudioside D is from 5 to 30 ppm. Alternatively, when the composition is added to a flavored article, the final concentration of rebaudioside D is from 5 to 25 ppm. Alternatively, when the composition is added to a flavored article, the final concentration of rebaudioside D is from 5 to 20 ppm. Alternatively, when the composition is added to a flavored article, the final concentration of rebaudioside D is from 5 to 15 ppm. Alternatively, when the composition is added to a flavored article, the final concentration of rebaudioside D is from 5 to 10 ppm.

In some embodiments, when the composition is added to a flavored article, the final concentration of rebaudioside D is from 10 to 45 ppm. Alternatively, when the composition is added to a flavored article, the final concentration of rebaudioside D is from 15 to 45 ppm. Alternatively, when the composition is added to a flavored article, the final concentration of rebaudioside D is from 20 to 45 ppm. Alternatively, when the composition is added to a flavored article, the final concentration of rebaudioside D is from 25 to 45 ppm. Alternatively, when the composition is added to a flavored article, the final concentration of rebaudioside D is from 30 to 45 ppm. Alternatively, when the composition is added to a flavored article, the final concentration of rebaudioside D is from 35 to 45 ppm. Alternatively, when the composition is added to a flavored article, the final concentration of rebaudioside D is from 40 to 45 ppm.

In some embodiments, when the composition is added to a flavored article, the final concentration of rebaudioside D is 5, or 10, or 15, or 20, or 35, or 30, or 35, or 40, or 45 ppm.

### Tabletop Compositions

In some further aspects, the disclosure provides a tabletop sweetener composition comprising: (a) at least one sweetener composition according to the invention; and (b) at least one bulking agent.

The tabletop sweetener composition may take any suitable form including, but not limited to, an amorphous solid, a crystal, a powder, a tablet, a liquid, a cube, a glace or coating, a granulated product, an encapsulated form abound to or coated on to carriers/particles, wet or dried, or combinations thereof.

The tabletop sweetener composition may contain further additives known to those skilled in the art. These additives include but are not limited to bubble forming agents, bulking agents, carriers, fibers, sugar alcohols, oligosaccharides, sugars, high intensity sweeteners, nutritive sweeteners, flavorings, flavor enhancers, flavor stabilizers, acidulants, anti-caking and free-flow agents. Such additives are for example described by H. Mitchell (H. Mitchell, "Sweeteners and Sugar Alternatives in Food Technology", Backwell Publishing Ltd, 2006, As used herein, the term "flavorings" may include those flavors known to the skilled person, such as natural and artificial flavors. These flavorings may be chosen from synthetic flavor oils and flavoring aromatics and/or oils, oleoresins and extracts derived from plants, leaves, flowers, fruits, and so forth, and combinations thereof. Non-limiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with cooling agents.

Flavors may also provide breath freshening properties, particularly the mint flavors when used in combination with cooling agents. These flavorings may be used in liquid or solid form and may be used individually or in admixture. Other useful flavorings include aldehydes and esters such as cinnamyl acetate, cinnamaldehyde, citral diethylacetal, dihydrocarvyl acetate, eugenyl formate, p- methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6- dimethyl-5-heptenal, i.e., melonal (melon), 2,6-dimethyloctanal (green fruit), and 2- dodecenal (citrus, mandarin), cherry, grape, strawberry shortcake, and mixtures thereof. These listings of flavorings are merely exemplary and are not meant to limit either the term "flavoring" or the scope of the disclosure generally.

In some embodiments, the flavoring may be employed in either liquid form and/or dried form. When employed in the latter form, suitable drying means such as spray drying the oil may be used. Alternatively, the flavoring may be absorbed onto water soluble materials, such as cellulose, starch, sugar, maltodextrin, gum arabic and so forth or may be encapsulated. The actual techniques for preparing such dried forms are well-known.

In some embodiments, the flavorings may be used in many distinct physical forms well- known in the art to provide an initial burst of flavor and/or a prolonged sensation of flavor. Without being limited thereto, such physical forms include free forms, such as spray dried, powdered, beaded forms, encapsulated forms, and mixtures thereof.

Suitable bulking agents include, but are not limited to maltodextrin (10 DE, 18 DE, or 5 DE), corn syrup solids (20 or 36 DE), sucrose, fructose, glucose, invert sugar, sorbitol, xylose, ribulose, mannose, xylitol, mannitol, galactitol, erythritol, maltitol, lactitol, isomalt, maltose, tagatose, lactose, inulin, glycerol, propylene glycol, polyols, polydextrose, fructooligosaccharides, cellulose and cellulose derivatives, and the like, and mixtures thereof. Additionally, granulated sugar (sucrose) or other caloric sweeteners such as crystalline fructose, other carbohydrates, or sugar alcohols can be used as a bulking agent due to their provision of good content uniformity without the addition of significant calories.

In one embodiment, the at least one bulking agent may be a bulking agent described in U.S. Patent No. 8,993,027.

In one embodiment, the at least one bulking agent may be a bulking agent described in U.S. Patent No. 6,607,771.

In one embodiment, the at least one bulking agent may be a bulking agent described in U.S. Patent No. 6,932,982.

In some embodiments, the tabletop sweetener composition may further comprise at least one anti-caking agent. As used herein the phrase "anti-caking agent" and "flow agent" refer to any composition which prevents, reduces, inhibits, or suppresses the at least one sweetener from attaching, binding, or contacting to another sweetener molecule. Alternatively, anti-caking agent may refer to any composition which assists in content uniformity and uniform dissolution. Non-limiting examples of anti-caking agents include cream of tartar, calcium silicate, silicon dioxide, microcrystalline cellulose (Avicel, FMC BioPolymer, Philadelphia, Pa.), and tricalcium phosphate. In one embodiment, the anti-caking agents are present in the tabletop sweetener composition in an amount from about 0.001 to about 3% by weight of the tabletop sweetener composition.

In some embodiments, the sweetener compositions of any of the preceding aspects and embodiments thereof are encapsulated using typical means for encapsulating flavor or fragrance compounds. Non-limiting examples of such technology are set forth in U.S. Patent Application Publication Nos. 2016/0235102, 2019/0082727, 2018/0369777, 2018/0103667, 2016/0346752, 2015/0164117, 2014/0056836, 2012/0027866, 2010/0172945, and 2007/0128234, as well as U.S. Patent Nos. 7,488,503, 6,416,799, 5,897,897, 5,786,017, 5,603,971, 4,689,235, 4,610,890, 3,704,137, 3,041,180, and 2,809,895.

### Flavored Articles

The sweetener compositions presented herein may be admixed with any known edible or oral composition (referred to herein as a "flavored article"), such as, for example, pharmaceutical compositions, edible gel mixes and compositions, dental compositions, foodstuffs (confections, condiments, chewing gum, cereal compositions baked goods dairy products, and tabletop sweetener compositions) beverages and beverage products.

In some embodiments, the present disclosure provides a flavored article comprising the sweetener composition according to the invention. In some embodiments, the flavored article comprises an effective amount of a composition according to the invention.

Flavored articles include, but are not limited to beverages, dental products, cosmetic products, pharmaceutical products and animal feed or animal food. For example, consumable products include all food products, including but not limited to cereal products, rice products, tapioca products, sago products, baker's products, biscuit products, pastry products, bread products, confectionary products, desert products, gums, chewing gums, chocolates, ices, honey products, treacle products, yeast products, baking-powder, salt and spice products, savory products, mustard products, vinegar products, sauces (condiments), tobacco products, cigars, cigarettes, processed foods, cooked fruits and vegetable products, meat and meat products, jellies, jams, fruit sauces, egg products, milk and dairy products, yoghurts, cheese products, butter and butter substitute products, milk substitute products, soy products, edible oils and fat products, medicaments, beverages, carbonated beverages, alcoholic drinks, beers, soft drinks, mineral and aerated waters and other non-alcoholic drinks, fruit drinks, fruit juices, coffee, artificial coffee, tea, cocoa, including forms requiring reconstitution, food extracts, plant extracts, meat extracts, condiments, sweeteners, nutraceuticals, gelatins, pharmaceutical and non-pharmaceutical gums, tablets, lozenges, drops, emulsions, elixirs, syrups and other preparations for making beverages, and combinations thereof.

As used herein, the term "non-alcoholic drinks" includes, but is not limited to all nonalcoholic drinks mentioned in the Directive 2003/115/EC of 22 December 2003 and in the Directive 94/35/EC of 30 June 2004, on sweeteners for use in foodstuffs. Examples include, but are not limited to water-based, flavored drinks, energy-reduced or with no added sugar, milk- and milk-derivative-based or fruit-juice-based drinks, energy-reduced or with no added sugar, "Gaseosa": nonalcoholic water-based drink with added carbon dioxide, sweeteners and flavorings.

Consumable products include without limitation, water-based consumables, solid dry consumables, dairy products, dairy-derived products and dairy-alternative products. In one embodiment, the consumable product is a water-based consumable product including but not limited to beverage, water, aqueous beverage, enhanced/slightly sweetened water drink, flavored carbonated and still mineral and table water, carbonated beverage, non-carbonated beverage, carbonated water, still water, soft drink, non-alcoholic drink, alcoholic drink, beer, wine, liquor, fruit drink, juice, fruit juice, vegetable juice, broth drink, coffee, tea, black tea, green tea, oolong tea, herbal infusion, cacao (e.g. water- based), tea-based drink, coffee-based drinks, cacao-based drink, infusion, syrup, frozen fruit, frozen fruit juice, water-based ice, fruit ice, sorbet, dressing, salad dressing, jams, marmalades, canned fruit, savoury, delicatessen products like delicatessen salads, sauces, ketchup, mustard, pickles and marinated fish, sauce, soup, and beverage botanical materials (e.g. whole or ground), or instant powder for reconstitution (e.g. coffee beans, ground coffee, instant coffee, cacao beans, cacao powder, instant cacao, tea leaves, instant tea powder). In another embodiment, the consumable product is a solid dry consumable product including but not limited to cereals, baked food products, biscuits, bread, breakfast cereal, cereal bar, energy bars/nutritional bars, granola, cakes, rice cakes, cookies, crackers, donuts, muffins, pastries, confectionaries, chewing gum, chocolate products, chocolate, fondant, hard candy, marshmallow, pressed tablets, snack foods, botanical materials (whole or ground), and instant powders for reconstitution.

Non-limiting examples of consumable products are disclosed in PCT Publication No. WO 2012/107203.

The present invention is illustrated, but is not limited to, the following examples.

### EXAMPLES

### Example 1: Sensory Evaluation of Compositions in Flavored Articles

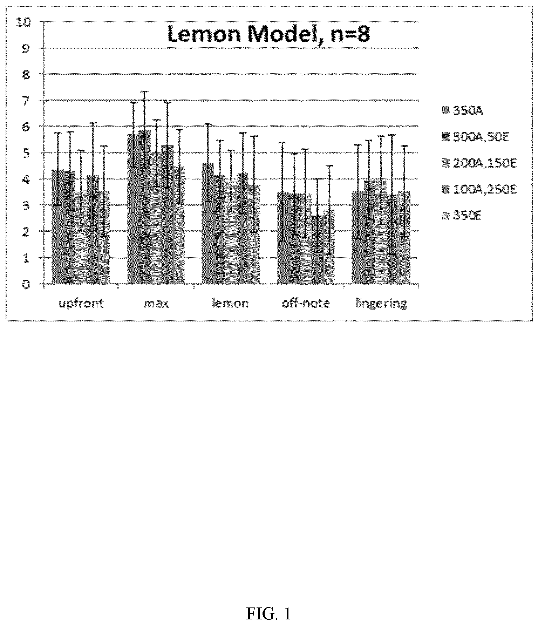

Composition 1 (not according to the invention): Several compositions comprising rebaudioside A and rebaudioside E were generated, and added to a lemon flavored drink model, wherein the final concentration of the composition was 350 ppm. The final concentrations of rebaudioside A and rebaudioside E in the lemon flavored drink models tested were as follows: (i) 300 ppm rebaudioside A and 50 ppm rebaudioside E (300A, 50E in FIG. 1); (ii) 200 ppm rebaudioside A and 100 ppm rebaudioside E (200A, 100E in FIG. 1); (iii) 100 ppm rebaudioside A and 250 ppm rebaudioside E (100A, 250E in FIG. 1); (iv) 350 ppm rebaudioside A control (350A in FIG. 1); and (v) 350 ppm rebaudioside E control (350A in FIG. 1).

The upfront sweetness, maximum sweetness, the intensity of lemon taste, the stevia off-note intensity and lingering sweetness reported by the test subjects for the lemon flavored drink models tested are shown in FIG 1. The lemon flavored drink model containing 100 ppm rebaudioside A and 250 ppm rebaudioside E (100A, 250E in FIG. 1) showed a reduction in the intensity of stevia off-notes. Note that in FIG. 1, for each set, the five bars are shown from left to right in the same order as the legend on the right from top to bottom.

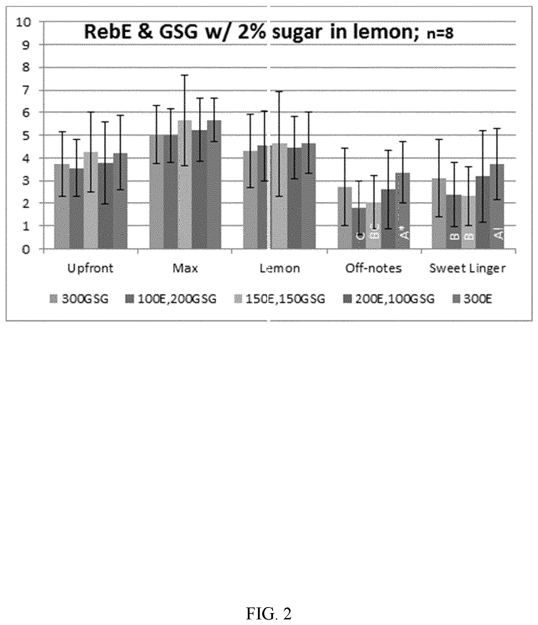

Composition 2 (not according to the invention): Several compositions comprising rebaudioside E and glucosylated natural steviol glycosides (GSGs) (GSG) were generated, and added to a lemon flavored drink model, wherein the final concentration of the composition was 300 ppm. The final concentrations of rebaudioside E and GSG in the lemon flavored drink models tested were as follows: (i) 100 ppm rebaudioside E and 200 ppm GSG (100E, 200GSG in FIG. 2); (ii) 150 ppm rebaudioside E and 150 ppm GSG (150E, 150GSG in FIG. 2); (iii) 200 ppm rebaudioside E and 100 ppm GSG (200E, 100GSG in FIG. 2); (iv) 300 ppm GSG (300GSG in FIG. 2); and (v) 300 ppm rebaudioside E (300E in FIG. 2).

The upfront sweetness, maximum sweetness, the intensity of lemon taste, the stevia off-note intensity and lingering sweetness reported by the test subjects for the lemon flavored drink models tested are shown in FIG. 2. The lemon flavored drink model containing 150 ppm rebaudioside E and 150 ppm GSG (150E, 150GSG in FIG. 2) showed a reduction in the intensity of stevia off-notes, and a synergistic increase in the maximum sweetness intensity. Note that in FIG. 2, for each set, the five bars are shown from left to right in the same order as the legend on the bottom from left to right.

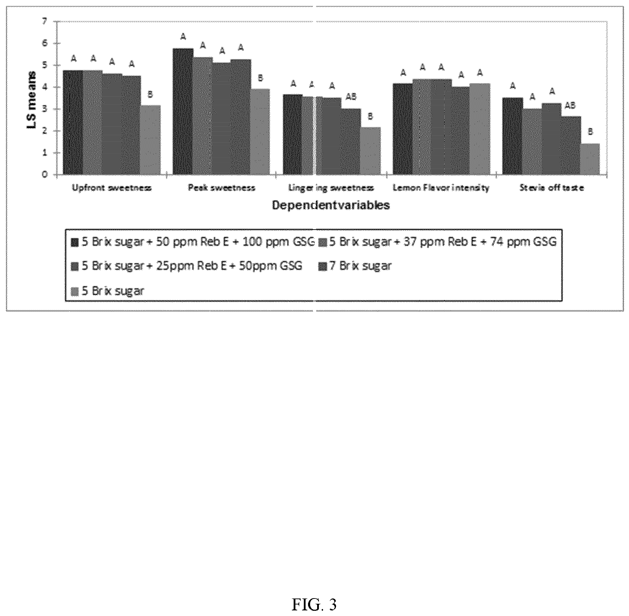

Composition 3 (not according to the invention): Several compositions comprising rebaudioside E and glucosylated natural steviol glycosides (GSGs) (GSG) were generated, and added to a lemon flavor drink model containing 5 Bx sucrose. The final concentrations of rebaudioside E and GSG in the lemon flavor drink models tested were as follows: (i) 5 Bx sucrose, 50 ppm rebaudioside E, and 100 ppm GSG (5 Brix sugar + 50 ppm Reb E + 100 ppm GSG in FIG. 3); (ii) 5 Bx sucrose, 37 ppm rebaudioside E, and 74 ppm GSG (5 Brix sugar + 37 ppm Reb E + 74 ppm GSG in FIG. 3); (iii) 5 Bx sucrose, 25 ppm rebaudioside E, and 50 ppm GSG (5 Brix sugar + 25 ppm Reb E + 50 ppm GSG in FIG. 3); (iv) 7 Bx sucrose (7 Brix sugar in FIG. 3); and 5 Bx sucrose (5 Brix sugar in FIG. 3).

The upfront sweetness, maximum sweetness, the intensity of lemon taste, the stevia off-note intensity and lingering sweetness reported by the test subjects for the lemon flavored drink models tested are shown in FIG. 3. All the compositions comprising rebaudioside E and GSG tested showed a sweetness enhancement equivalent to 2 degrees Brix in the presence of sucrose, without imparting sweetness of their own in the absence of sugar/sweetener. Note that in FIG. 3, for each set, the five bars are shown from left to right in the same order as the legend at the bottom from top left to top right, then to middle left, then to middle right, then to bottom left.

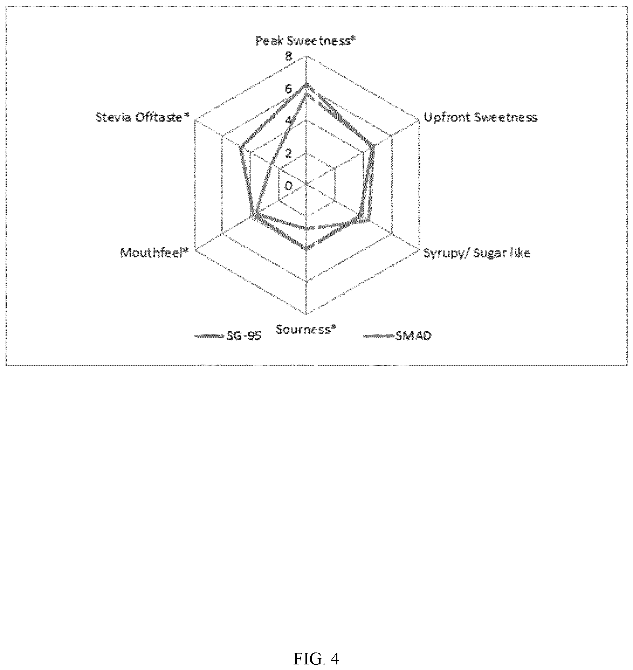

Composition 4 (according to the invention): A composition comprising an extract comprising steviol glycosides, rebaudioside M, rebaudioside A; and rebaudioside D was added to a pineapple-orange juice beverage model, wherein the final concentrations of the extract comprising steviol glycosides, rebaudioside M, rebaudioside A; and rebaudioside D was 45, 150, 45, and 150 ppm, respectively. A control beverage comprising a pineapple-orange juice beverage model containing 390 ppm of an extract comprising steviol glycosides was also generated. The sensory properties are shown in FIG. 4.

The composition comprising an extract comprising steviol glycosides, rebaudioside M, rebaudioside A; and rebaudioside D showed a reduction in the stevia off-notes.

## Claims

1. A sweetener composition comprising rebaudioside A, rebaudioside D, rebaudioside M, stevioside, rebaudioside B, rebaudioside C, rebaudioside F, dulcoside A, rubusoside, and steviolbioside;
wherein the weight ratio of rebaudioside M to rebaudioside A ranges from 9:16 to 10:3.

2. The sweetener composition of claim 1, wherein the weight ratio of rebaudioside M to rebaudioside D ranges from 1:1 to 3:2.

3. The sweetener composition of claim 1 or 2, wherein the weight ratio of rebaudioside A to rebaudioside D ranges from 3:10 to 8:1.

4. A flavored article comprising a sweetener composition of any one of claims 1 to 3.

5. A tabletop sweetener comprising a bulking agent and a sweetener composition of any one of claims 1 to 3.

6. The tabletop sweetener of claim 5, wherein at least a portion of the sweetener composition is encapsulated.

## Patentansprüche

1. Süßstoffzusammensetzung, umfassend Rebaudiosid A, Rebaudiosid D, Rebaudiosid M, Steviosid, Rebaudiosid B, Rebaudiosid C, Rebaudiosid F, Dulcosid A, Rubusosid und Steviolbiosid;
wobei das Gewichtsverhältnis von Rebaudiosid M zu Rebaudiosid A im Bereich von 9:16 bis 10:3 liegt.

2. Süßstoffzusammensetzung nach Anspruch 1, wobei das Gewichtsverhältnis von Rebaudiosid M zu Rebaudiosid D im Bereich von 1:1 bis 3:2 liegt.

3. Süßstoffzusammensetzung nach Anspruch 1 oder 2, wobei das Gewichtsverhältnis von Rebaudiosid A zu Rebaudiosid D im Bereich von 3:10 bis 8:1 liegt.

4. Aromatisierter Artikel, umfassend eine Süßstoffzusammensetzung nach einem der Ansprüche 1 bis 3.

5. Tischsüßstoff, umfassend einen Füllstoff und eine Süßstoffzusammensetzung nach einem der Ansprüche 1 bis 3.

6. Tischsüßstoff nach Anspruch 5, wobei mindestens ein Teil der Süßstoffzusammensetzung eingekapselt ist.

## Revendications

1. Composition d'édulcorant comprenant du Rébaudioside A, du Rébaudioside D, du Rébaudioside M, du stévioside, du Rébaudioside B, du Rébaudioside C, du Rébaudioside F, du dulcoside A, du rubusoside, et du stéviolbioside ;
dans laquelle le rapport pondéral du Rébaudioside M sur Rébaudioside A va de 9:16 à 10:3.

2. Composition d'édulcorant selon la revendication 1, dans laquelle le rapport pondéral du Rébaudioside M sur Rébaudioside D va de 1:1 à 3:2.

3. Composition d'édulcorant selon la revendication 1 ou 2, dans laquelle le rapport pondéral du Rébaudioside A sur Rébaudioside D va de 3:10 à 8:1.

4. Article aromatisé comprenant une composition d'édulcorant selon l'une quelconque des revendications 1 à 3.

5. Édulcorant de table comprenant un agent de charge et une composition d'édulcorant selon l'une quelconque des revendications 1 à 3.

6. Édulcorant de table selon la revendication 5, dans lequel au moins une partie de la composition d'édulcorant est encapsulée.
